(19) **Europäisches Patentamt**

**European Patent Office**

**Office européen des brevets**

(11) **EP 1 140 564 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(21) Anmeldenummer: **00903519.7**

(22) Anmeldetag: **12.01.2000**

(51) Int Cl.⁷: **B60R 21/00**

(86) Internationale Anmeldenummer:
**PCT/DE00/00089**

(87) Internationale Veröffentlichungsnummer:
**WO 00/041918 (20.07.2000 Gazette 2000/29)**

(54) **STEUERANORDNUNG FÜR INSASSENSCHUTZMITTEL IN EINEM KRAFTFAHRZEUG**

CONTROL SYSTEM FOR PASSENGER PROTECTION MEANS IN A MOTOR VEHICLE

SYSTEME DE COMMANDE POUR MOYENS DE PROTECTION POUR PASSAGERS D'UNE AUTOMOBILE

(84) Benannte Vertragsstaaten:
**DE FR GB IT**

(30) Priorität: **12.01.1999 DE 19900845**

(43) Veröffentlichungstag der Anmeldung:
**10.10.2001 Patentblatt 2001/41**

(73) Patentinhaber: **SIEMENS AKTIENGESELLSCHAFT**
**80333 München (DE)**

(72) Erfinder:
• **SCHMIDT, Claus**
**D-93053 Regensburg (DE)**
• **MADER, Gerhard**
**D-93107 Thalmassing (DE)**

(56) Entgegenhaltungen:
**WO-A-89/11986** **WO-A-98/19171**
**DE-A- 3 816 589** **DE-A- 19 645 952**
**US-A- 5 742 916**

**Beschreibung**

Die Erfindung betrifft eine Steueranordnung für Insassenschutzmittel in einem Kraftfahrzeug.

Aus der EP 0 419 455 B1 ist eine Steueranordnung zum Auslösen eines Rückhaltemittels in einem Kraftfahrzeug bekannt, bei der eine Sensoreinrichtung ein Längsbeschleunigungssignal und ein Querbeschleunigungssignal liefert. In Abhängigkeit von dem Längs- und von dem Querbeschleunigungssignal wird von einer nachgeschalteten Auswerteeinrichtung der Steueranordnung ein Auslösesignal für das Rückhaltemittel zum Frontaufprallschutz generiert.

Eine Steueranordnung zum Auslösen eines Rückhaltemittels in einem Kraftfahrzeug ist zudem aus der US 4 933 570 bekannt. Hierbei wird in Abhängigkeit eines von einem Beschleunigungssensor gelieferten Signals und eines Schaltsignals eines mechanischen Beschleunigungsschalters ein Auslösesignal für das Rückhaltemittel erzeugt. Derartige als Beschleunigungsschalter ausgebildete sogenannte Safing-Sensoren sorgen für eine Verhinderung der Auslösung des Rückhaltemittels, wenn der Beschleunigungssensor oder die Auswerteeinrichtung fehlerhaft arbeitet und demzufolge ein fehlerhaftes Auslösesignal liefern. Ein solcher Beschleunigungsschalter im Zündkreis weist gewöhnlich eine niedrige Ansprechschwelle auf und liefert damit ein Zeitfenster, innerhalb dessen eine Auslösung aufgrund einer Bewertung der von dem Beschleunigungssensor gelieferter Signale erfolgen kann.

Bei sogenannten mehrkanaligen Steueranordnungen zum Insassenschutz, d.h. bei Steueranordnungen mit mehreren unterschiedlich ausgerichteten Beschleunigungssensoren, kann jedem einzelnen Sensor ein redundanter Sensor mit den Eigenschaften eines Safing-Sensors - also z.B. ein mechanischer Beschleunigungsschalter - zugeordnet werden. Bei einer Steueranordnung mit zwei Kanälen wären demzufolge vier Beschleunigungssensoren/-schalter erforderlich, um den Ausfall eines Kanals feststellen zu können. Eine solche Steueranordnung mit vier Beschleunigungssensoren ist bauteilintensiv und beansprucht aufgrund der nach wie vor relativ großen Abmessungen von Safing-Sensoren großen Bauraum.

Weiterhin ist aus der DE 196 45 952 A1 eine Steueranordnung zum Auslösen eines Rückhaltemittels in einem Kraftfahrzeug bekannt, die eine Sensoreinrichtung mit drei Längsbeschleunigungssensoren aufweist. Die Beschleunigungssensoren sind derart sternförmig angeordnet, dass sie jeweils unterschiedlich ausgerichtete Empfindlichkeitsachsen aufweisen. In einer nachgeschalteten Auswerteeinrichtung kann bereits aus den Signalen von nur zwei der drei Beschleunigungssensoren die Richtung und die Stärke einer auf das Fahrzeug einwirkender Beschleunigung ermittelt werden. Das Signal des dritten Beschleunigungssensors wird hierbei zur Überprüfung einer der beiden errechneten Größen, der Richtung oder der Stärke der auf das Fahrzeug einwirkenden Beschleunigung, herangezogen. Der dritte Sensor übernimmt somit die Funktion eines Safing-Sensors und kann auf diese Weise die Auslösung des Rückhaltemittels verhindern, wenn der von ihm zur Verfügung gestellte Wert signifikant von einem zuvor aus den Signalen der beiden anderen Sensoren berechneten Wert abweicht.

Aus der WO-A-98/19171 ist eine Steueranordnung für Insassenschutzmittel in einem Kraftfahrzeug bekannt, mit einer Sensoreinrichtung (26) bestehend aus zwei Beschleunigungssensoren mit zwei zueinander senkrechten Empfindlichkeitsachsen, die beide in einer Ebene parallel zu einer durch eine Fahrzeuglängsachse und eine Fahrzeugquerachse festgelegten Ebene liegen, sowie einem weiteren Beschleunigungssensor mit einer, zur durch die Fahrzeuglängsachse und die Fahrzeugquerachse festgelegten Ebene, parallelen Ebene liegenden Empfindlichkeitsachse, wobei dessen Empfindlichkeitsachse mit einer der Empfindlichkeitsachsen der zwei Beschleunigungssensoren einen Winkel von 45° aufweist; und mit einer Auswerteeinrichtung zum Auswerten von von den zwei Beschleunigungssensoren gelieferten Beschleunigungssignalen und zur Erzeugung eines Auslösesignals zur Auslösung der Insassenschutzmittel, wobei aus den Beschleunigungssignalen der zwei Beschleunigungssensoren ein Referenzwert gebildet wird, sodaß bei einer signifikanten Abweichung eines vom weiteren Beschleunigungssensor gelieferten Beschleunigungssignals vom Referenzwert ein Warnsignal erzeugt wird; und mit einer der Auswerteeinrichtung nachgeschalteten Schalteinheit zur Ausgabe eines Zündsignals in Abhängigkeit vom Auslösesignal.

Aufgabe der Erfindung ist es, bei einer mehrkanaligen Steueranordnung zum Insassenschutz eine Safing-Funktion zur Erkennung von Fehlfunktionen zur Verfügung zu stellen, die mittels weniger kostengünstiger Standardbauteile realisiert werden kann.

Die Aufgabe wird erfindungsgemäß durch die Merkmale des Patentanspruchs 1 gelöst. Der besondere Vorteil gegenüber einem herkömmlichen Safing-Konzept mit drei Analogsensoren, d.h. einer Plausibilitätsüberwachung der von zwei Sensoren gelieferten Signalen mit dem von einem dritten Sensor erzeugten Signal, liegt in der Vereinfachung der Signalverarbeitung sowie in der Verringerung des Kostenaufwandes. Es kann ein herkömmlicher Crashalgorithmus unter Verwendung eines kostengünstigen und in hohen Stückzahlen hergestellten X-Y-Crashsensors zur Anwendung kommen. Dies stellt eine deutliche Verbilligung gegenüber der Verwendung von mehreren getrennten Analogsensoren dar. Zudem wird dabei der in einer nachgeschalteten Auswerteeinheit vorzugsweise verwendete Mikroprozessor gegenüber dem bei einer 120°-Sternanordnung von drei Analogsensoren notwendigen Rechenaufwand nur relativ gering belastet.

Vorteilhafte Weiterbildungen der Erfindung sind in den Unteransprüchen gekennzeichnet.

Vorteile der Erfindung und ihre Weiterbildungen finden sich in der Figurenbeschreibung.

Die Erfindung und ihre Weiterbildungen werden anhand von Ausführungsbeispielen in der Zeichnung näher erläutert. Es zeigen:

Figur 1 ein symbolisch angedeutetes Fahrzeug mit einer Sensoreinrichtung der erfindungsgemäßen Steueranordnung,

Figur 2 ein Blockschaltbild der erfindungsgemäßen Steueranordnung, und

Figur 3 ein Blockschaltbild einer Teilfunktion der Steueranordnung gemäß Figur 2.

Gleiche Elemente bzw. Signale sind figurenübergreifend durch gleiche Bezugszeichen gekennzeichnet.

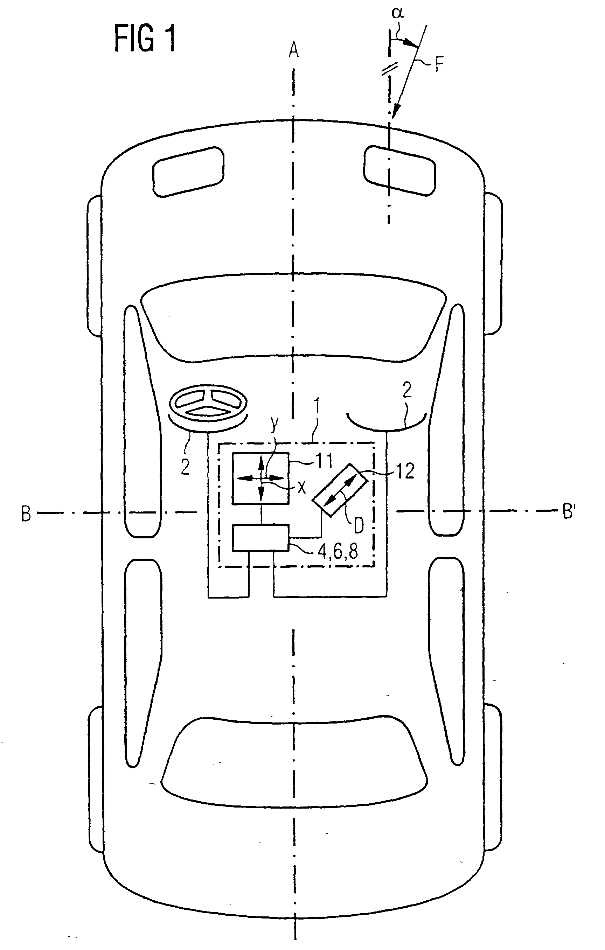

Figur 1 zeigt die erfindungsgemäße Steueranordnung in einem symbolisch angedeuteten Kraftfahrzeug. Erkennbar sind eine Fahrzeuglängsachse A-A' sowie eine Fahrzeugquerachse B-B'. In etwa zentraler Einbauposition im Fahrzeug befindet sich ein Steuergerät 1 zur Ansteuerung von Insassenschutzmitteln. Das Steuergerät 1 enthält einen X-Y-Beschleunigungssensor 11, einen weiteren Beschleunigungssensor 12 sowie Einrichtungen 4, 6, 8 zum Erfassen und Auswerten der von den Beschleunigungssensoren 11, 12 gelieferten Signale und zum Ansteuern der Insassenschutzmittel. Unter einer zentralen Einbauposition des Steuergeräts 1 im Fahrzeug ist insbesondere eine Einbaulage des X-Y-Beschleunigungssensors 11 sowie des, im folgenden auch als Analogsensor 12 bezeichneten, Beschleunigungssensors 12 im oder nahe am Fahrzeugschwerpunkt zu verstehen. Das Steuergerät 1 kann als zentrale Baueinheit ausgeführt sein; ebenso möglich ist jedoch eine Ausführung mit voneinander getrennten Komponenten 11, 12, 4, 6, 8.

In Figur 1 sind als Insassenschutzmittel beispielhaft Fahrerund Beifahrerairbags 2 angedeutet. Als weitere Insassenschutzmittel kommen beispielsweise Seiten- und Kopfairbags, Gurtstraffer, sogenannte aktive Kopfstützen (d.h. abhängig von der Kopf- und Körperverlagerung während und nach einem Aufprall den Abstand zum Kopf verringernde Kopfstützen), ausfahrbare Überrollbügel, etc. in Frage. Wenn in vorliegendem Zusammenhang von Insassenschutz- oder Rückhaltemitteln die Rede ist, dann sind die genannten Schutzeinrichtungen damit umfasst.

Der X-Y-Beschleunigungssensor 11 weist zwei Empfindlichkeitsachsen x, y auf, die eine Ebene aufspannen, die parallel ist zu der aus Fahrzeuglängsachse A-A' und Fahrzeugquerachse B-B' gebildeten Ebene. Die Empfindlichkeitsachsen x, y des X-Y-Beschleunigungssensors 11 können jeweils parallel zu den Fahrzeuglängsachsen ausgerichtet sein. Ebenso möglich und zweckmäßig ist jedoch jede andere Ausrichtung; eine Funktionseinschränkung ist mit unterschiedlichen Anordnungen nicht verbunden. Alleine aus den vom X-Y-Beschleunigungssensor 11 gelieferten Signalen lässt sich eine Stärke sowie ein Winkel eines Aufpralles gewinnen. Eine solche beispielhafte Aufprallrichtung von schräg rechts vorne ist durch den schrägen Pfeil F verdeutlicht, der um einen Winkel $\alpha$ gegen die Fahrzeuglängsachse A-A' geneigt ist.

Der Analogsensor 12 weist eine Empfindlichkeitsachse D auf, die parallel zu der aus den Empfindlichkeitsachsen x und y aufgespannten Ebene liegt. Um als Plausibilitätsprüfung, d.h. als sogenannter Safing-Sensor fungieren zu können, muss die Empfindlichkeitsachse D des Analogsensors 12 signifikant winkelig zur Empfindlichkeitsachse x bzw. zur Achse y des X-Y-Beschleunigungssensors liegen. Vorteilhaft ist beispielsweise ein zwischen den Achsen D und x eingeschlossener Winkel $\delta$ von 45° oder von 135°. Auch andere Winkelwerte beeinträchtigen die Funktion nicht, sofern der Winkel zwischen den Empfindlichkeitsachsen D und x (oder D und y) nicht weniger als ca. 15° beträgt. Bei noch kleineren Winkeldifferenzen wäre die gewünschte Funktion aufgrund unvermeidlicher Messungenauigkeiten und der daraus resultierenden Gefahr von nicht mehr feststellbaren Messdifferenzen der Ausgangssignale kaum mehr zu gewährleisten.

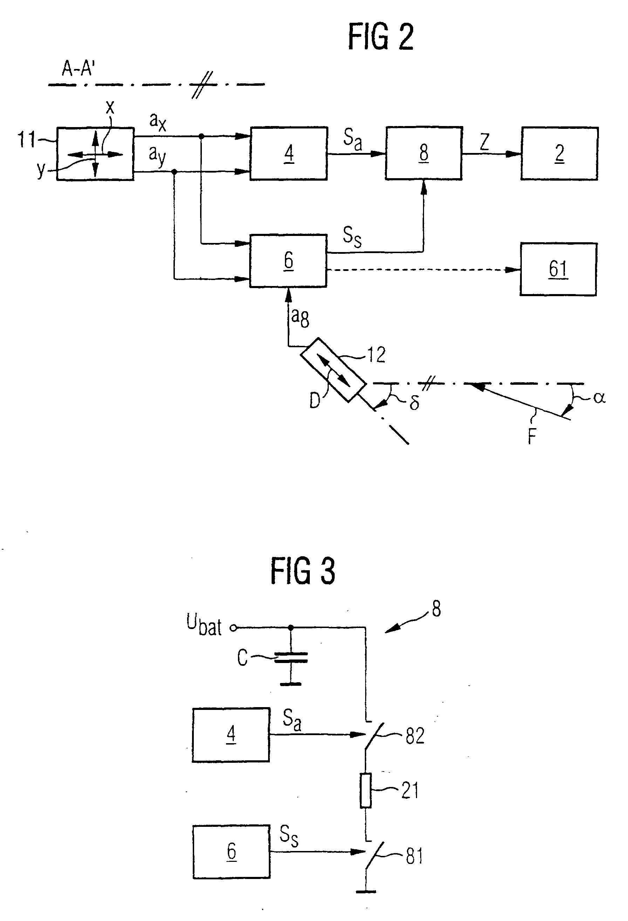

Figur 2 zeigt ein Blockschaltbild einer ersten Ausführungsform der Steueranordnung, wobei hier die Empfindlichkeitsachse x des X-Y-Beschleunigungssensors 11 parallel zur Fahrzeuglängsachse A-A' vorgesehen ist. Die dazu senkrechte Empfindlichkeitsachse y liegt demnach parallel zur - hier nicht eingezeichneten - Fahrzeugquerachse B-B'. Der X-Y-Beschleunigungssensor 11, vorzugsweise ein zweikanaliger Analogsensor, ist elektrisch verbunden mit einer, vorzugsweise als Mikroprozessor ausgebildeten, Auswerteeinrichtung 4, und liefert an diese seine Beschleunigungssignale $a_x$, $a_y$. Je nach Richtung in negativer oder positiver x- und y-Richtung sowie der festgestellten Stärke eines Aufpralles werden positive oder negative Signale erzeugt. Die Auswerteeinrichtung 4 wertet die Beschleunigungssignale $a_x$, $a_y$ aus und generiert je nach Richtung $\alpha$ und Stärke F der auf das Fahrzeug einwirkenden Beschleunigung ein Auslösesignal $S_a$ zur Auslösung der Insassenschutzmittel. Das eingezeichnete einzelne Auslösesignal $S_a$ repräsentiert die Gesamtheit der von der zentralen Auswerteeinrichtung erzeugten Auslösesignale, die zur Ansteuerung der im jeweiligen Anwendungsfall vorgesehenen verschiedenen Insassenschutzmittel dienen. Das Auslösesignal $S_a$ wird zu einer Schalteinheit 8 übertragen, die ein Zündsignal Z für die Insassenschutzmittel 2 erzeugen kann.

Erkennbar ist weiterhin der weitere Beschleunigungssensor bzw. Analogsensor 12 mit einer Empfindlichkeitsachse D schräg zu den Achsen x und y. Im dargestellten Beispiel beträgt der Winkel $\delta$ zwischen der Empfindlichkeitsachse D und der Fahrzeuglängsachse A-A' und damit auch der dazu parallelen Empfindlichkeitsachse x ca. 45°. Bei dem beispielhaft gewählten Aufprallwinkel $\alpha$ von ca. 30° bedeutete dies eine relativ starke Auslenkung des Analogsensors 12, welche annähernd der tatsächlichen Aufprallstärke F entspräche. Im gewählten Beispielfall ließe sich der Betrag der Auslenkung in Richtung der Fahrzeuglängsachse A-A' aus dem Ausgangssignal $a_\delta$ des A-naiogsensors 12 aus

$$a_\delta = K_{12} * F * \cos(\alpha - \delta)$$

$$= K_{12} * F * \cos(30° - 45°)$$

$$= K_{12} * F * \cos(-15°)$$

bestimmen, wobei $K_{12}$ eine hardwareabhängige Konstante zur Anpassung des Ausgangssignals $a_\delta$ des Analogsensors 12 darstellt.

Es soll an dieser Stelle betont werden, dass der beispielhaft gewählte oder tatsächliche Aufprallwinkel $\alpha$ für die erfindungsgemäße Safing-Funktion der Steueranordnung keinerlei Rolle spielt. Die grundsätzliche Wirkungsweise beruht darauf, einen erwarteten (gewichteten) Wert R für $a_\delta$ aus den Signalen $a_x$ und $a_y$ zu berechnen und diesen dann mit dem tatsächlich gemessenen Aufgangssignal $a_\delta$ des Analogsensors 12 zu vergleichen. Bei einer Übereinstimmung von R und $a_\delta$ innerhalb eines definierten Toleranzfensters wird kein Störfallsignal erzeugt, bzw. kann ein Freigabesignal erzeugt werden.

Der Analogsensor 12 liefert das Beschleunigungssignal $a_\delta$ an eine Safing-Auswerteeinheit 6. Da die Safing-Auswerteeinheit 6 zudem noch die Beschleunigungssignale $a_x$ und $a_y$ verarbeitet, kann sie aus diesen jeweils einen Referenzwert R bilden, der mit dem erwarteten Safing-Beschleunigungssignal $a_\delta$ zu vergleichen ist. Bei einer signifikanten Abweichung der beiden Signale wird ein Sperrsignal $S_s$ erzeugt und an die Schalteinheit 8 übertragen. So ließe sich im gewählten Ausführungsbeispiel ein Referenzwert $R_x$ für das Beschleunigungssignal $a_x$ in x-Richtung mit

$$R_x = K_{11} * F * \cos\alpha$$

festlegen, wobei hier das Ausgangssignal $a_x$ des X-Y-Beschleunigungssensors in Richtung der Fahrzeuglängsachse A-A' positiv gewählt ist bei einer Beschleunigung entgegen der Fahrtrichtung, d.h. bei einem Aufprall von vorne. Der Faktor $K_{11}$ stellt wiederum eine Konstante zur Anpassung des Referenzsignals $R_x$ dar. In gleicher Weise lässt sich ein Referenzwert $R_y$ für das Beschleunigungssignal $a_y$ in y-Richtung mit

$$R_y = K_{11} * F * \sin\alpha$$

festlegen, wobei hier das Ausgangssignal $a_y$ des X-Y-Beschleunigungssensor in Richtung der Fahrzeugquerachse B-B' positiv gewählt ist bei einer Beschleunigungskomponente von (in Fahrtrichtung) rechts. Die Referenzwerte $R_x$ und $R_y$ lassen sich bei geeigneter Wahl der Konstanten $K_{11}$ und $K_{12}$ jeweils mit dem Beschleunigungssignal $a_\delta$ für die Auslenkung des Analogsensors 12 in Fahrzeuglängsrichtung gleichsetzen, um daraus bei signifikanter Abweichung das Sperrsignal $S_s$ zu erzeugen.

In allgemeinerer Form läßt sich die Safing-Funktion folgendermaßen formulieren:

$$R = K_{11} * (a_x + a_y),$$

wobei

$$R = K_{12} * a_\delta$$

gelten muß, soll eine einwandfreie Funktion der Sensoren erkannt werden. Daraus wird nochmals die grundsätzliche Wirkungsweise der Safing-Funktion der Steueranordnung deutlich, nämlich die Bildung eines theoretischen (gewichteten) Wertes R für das Ausgangssignal eines dritten Sensors 12 aus den Ausgangssignalen eines X-Y-Beschleunigungssensors 11 und der anschließende Vergleich des theoretischen Wertes R mit dem tatsächlichen Ausgangssignal $a_\delta$ des Sensors 12.

Bei Empfang des Sperrsignals $S_s$ verhindert die Schalteinheit 8 trotz Empfangs eines Auslösesignals $S_a$ die Ausgabe eines Zündsignals Z an das Rückhaltemittel 2. Wie erwähnt, repräsentiert die Schalteinheit 8 eine Mehrzahl von Schalteinheiten zur Erzeugung von mehreren Zündsignalen, sofern im Fahrzeug eine Mehrzahl von Insassenschutzmitteln vorgesehen sind.

In der erfindungsgemäßen Steueranordnung werden die von den Beschleunigungssensoren 11, 12 an die-Safing-Auswerteeinheit 6 gelieferten Beschleunigungssignale $a_x$, $a_y$, $a_\delta$ gleichzeitig zur Bildung eines Schwellwertes SW verwendet. Diese kann in einer einfachen Schwellwertanalyse von nur einem, von zwei oder auch von allen drei Beschleunigungssignalen $a_x$, $a_y$, $a_\delta$ bestehen. Zweckmäßigerweise erfolgt jedoch eine logarithmische Erfassung der Signale und/oder eine Integralbildung über die Zeit mit nachfolgender Integralauswertung, um auf diese Weise zu zuverlässigeren Aussagen über einen Crashverlauf zu gelangen.

Durch eine solche Schwellwertanalyse wird verhindert, daß auch im Stillstand des Fahrzeuges oder bei sehr langsamer Fahrt eine Freigabe eines Zündsignals Z in der Schalteinheit 8 erfolgen kann. Vielmehr wird immer dann ein Sperrsignal $S_s$ von der Safing-Auswerteeinheit 6 generiert, solange der vorbestimmte Schwellwert SW nicht durch das Signal wenigstens einer Empfindlichkeitsachse der Beschleunigungssensoren 11, 12 überschritten wird. Erst wenn mindestens ein Wert eines Beschleunigungssignals $a_x$, $a_y$, $a_\delta$ den vorgestimmten Schwellwert SW (als Einzelwert oder als zeitliches Integral) übersteigt, wird die Safingfunktion freigegeben.

Weiterhin ist eine optional vorzusehende Warneinrichtung 61 erkennbar, die beispielsweise als optischer Signalgeber oder als sonstige Anzeigeeinheit ausgestaltet sein kann. Auch ist die Ausgabe eines Störsignals an eine Speicher- bzw. eine Diagnoseeinrichtung denkbar, so dass eine schnelle Erkennung und Behebung der Störung durch Servicekräfte möglich ist.

Der Vorteil dieser Anordnung liegt in der schnellen und zuverlässigen Signalverarbeitung im Mikroprozessor der Auswerteeinrichtung 4; dort werden lediglich die Beschleunigungssignale $a_x$, $a_y$ des X-Y-Beschleunigungssensors verarbeitet.

Die Sicherheitsüberwachung des von der Auswerteeinrichtung erzeugten Auslösesignals $S_a$ erfolgt hierbei ausschließlich in der von der Auswerteeinrichtung 4 getrennten Safing-Auswerteeinheit 6. Während also der Prozessor in der Auswerteeinrichtung sich nur um die Signale vom X-Y-Sensor kümmern muss, prüft die Safingauswertung diese Sensorsignale auf Plausibilität. Weiterhin werden Kriterien festgelegt, die die Sensorsignale erfüllen müssen, damit eine Zündbereitschaft erzeugt werden kann. Gibt zudem der Prozessor auch noch ein Freigabesignal, so können die Auslöser für die Rückhaltemittel gezündet werden. Die Safing-Auswerteeinheit 6 kann entweder getrennt vom Analogsensor 12 oder in einer Baueinheit mit diesem ausgeführt sein.

Figur 3 zeigt eine beispielhafte Anordnung der Schalteinheit 8, bestehend aus einem zwischen zwei Schaltern 81 und 82 im Bordnetz befindlichen Zündelement 21. Die Schalter 81 und 82 sind vorzugsweise als Transistorschalter ausgeführt. Die Spannungsversorgung im Fahrzeug $U_{bat}$ sorgt für einen geladenen Zündkondensator C, der sich bei geschlossenen Schaltern 81 und 82 gegen die Masse entladen kann und dabei für eine Erhitzung des durch einen Widerstand symbolisierten Zündelementes 21 sorgt. Wenn die Auswerteeinrichtung 4 einen Aufprall erkannt hat, liefert sie ein Auslösesignal $S_a$, welches für ein Schließen des (Transistor-)Schalters 82 sorgt. Eine Zündung kann allerdings erst dann erfolgen, wenn die Plausibilitätskontrolle in der Safing-Auswerteeinheit 6 keinen Fehler erkannt hat und kein Sperrsignal $S_s$ an den Schalter 81 liefert. Ist dies der Fall, bleibt der (Transistor-)Schalter 81 offen, d.h. es erfolgt keine Zündung.

Die erfindungsgemäße Steueranordnung weist gegenüber herkömmlichen Safingkonzepten, die üblicherweise drei in Sternanordnung mit einem Winkelverhältnis von jeweils 120° zueinander stehende Analogsensoren aufweisen, insbesondere den Vorteil auf, dass die herkömmlichen Algorithmen zur Crashdetektion und davon abhängigen Auslösung von Insassenschutzmitteln ohne weiteres Verwendung finden können, die die Beschleunigungssignale $a_x$, $a_y$ des X-Y-Beschleunigungssensors 11 direkt zur Verfügung stehen.

Auch ist auf diese Weise eine geringere Belastung des in der Auswerteeinrichtung 4 üblicherweise vorgesehenen Mikroprozessors sichergestellt, da nur die beiden Signale $a_x$, $a_y$ des X-Y-Beschleunigungssensors 11 verarbeitet werden, anstatt die Signale dreier Analogsensoren. Weiterhin ist von Vorteil, dass anstatt zwei separater Analogsensoren ein integrierter X-Y-Beschleunigungssensor 11 zur Anwendung kommt, wodurch die Steueranordnung kostengünstiger zu realisieren ist.

## Patentansprüche

1. Steueranordnung für Insassenschutzmittel in einem Kraftfahrzeug,

   - mit einer Sensoreinrichtung, bestehend aus wenigstens einem X-Y-Beschleunigungssensor (11) mit zwei zueinander senkrechten Empfindlichkeitsachsen (x,y), die beide in einer Ebene parallel zu einer in etwa durch eine Fahrzeuglängsachse (A-A') und eine Fahrzeugquerachse (B-B') festgelegten Ebene liegen, sowie

   - einem weiteren Beschleunigungssensor (12) mit einer, zur durch die Fahrzeuglängsachse (A-A') und die Fahrzeugquerachse (B-B') festgelegten Ebene, parallelen Ebene liegenden Empfindlichkeitsachse (D),

   - wobei dessen Empfindlichkeitsachse (D) mit einer der Empfindlichkeitsachsen (x,y) des X-Y-Beschleunigungssensors (11) einen Winkel ($\delta$) einschließt, der einen Wert zwischen 15° und 75° aufweist,

   - mit einer Auswerteeinrichtung (4) zum Auswerten von vom X-Y- Beschleunigungssensor (11) gelieferten Beschleunigungssignalen $(a_x, a_y)$ und zur Erzeugung eines Auslösesignals $(S_a)$ zur Auslösung der Insassenschutzmittel, und

   - mit einer der Auswerteeinrichtung (4) nachgeschalteten Schalteinheit (8) zur Ausgabe eines Zündsignals (Z) in Abhängigkeit vom Auslösesignal $(S_a)$ und eines weiteren Signals, wobei aus den Beschleunigungssignalen $(a_x, a_y)$ des X-Y-Beschleunigungssensors (11) in einer Safing-Auswerteeinheit (6) ein Referenzwert (R) gebildet wird, und

     wobei bei einer signifikanten Abweichung eines vom weiteren Beschleunigungssensor (12) gelieferten Beschleunigungssignals $(a_\delta)$ vom Referenzwert (R) ein Sperrsignal $(S_s)$ erzeugt und an die Schalteinheit (8) geliefert wird, welches die Ausgabe des Zündsignals (Z) zum Auslösen der Insassenschutzmittel auch dann verhindert, wenn von der Auswerteeinrichtung (4) ein Auslösesignal $(S_a)$ erzeugt wird und

   - wobei in der Safing-Auswerteeinheit (6) aus wenigstens einem der empfangenen Beschleunigungssignale $(a_x, a_y, a_\delta)$ ein Schwellwert (SW) gebildet wird, und dass erst beim Überschreiten des Schwellwertes (SW) durch wenigstens eines der Beschleunigungssignale $(a_x, a_y, a_\delta)$ die Ausgabe des Sperrsignals $(S_s)$ an die Schalteinheit (8) verhindert wird.

2. Steueranordnung nach Anspruch 1, **dadurch gekennzeichnet, dass** in der Auswerteeinrichtung (4) aus den vom X-Y-Beschleunigungssensor (11) gelieferten Beschleunigungssignalen $(a_x, a_y)$ eine Richtung ($\alpha$) und eine Stärke (F) einer auf das Kraftfahrzeug einwirkenden Beschleunigung ermittelt wird, und dass ein vom Beschleunigungssensor (12) geliefertes Beschleunigungssignal $(a_\delta)$ zur Erzeugung eines Störfallsignals verwendet wird, wenn eine signifikante Differenz für die Richtung ($\alpha$) und die Stärke (F) aus den Beschleunigungssignalen $(a_x, a_y, a_\delta)$ erkannt wird.

3. Steueranordnung nach Anspruch 1 oder 2, **dadurch gekennzeichnet, dass** das vom Beschleunigungssensor (12) erzeugte Beschleunigungssignal $(a_\delta)$ in einer Safing-Auswerteeinheit (6) mit den Beschleunigungssignalen $(a_x, a_y)$ verglichen wird.

4. Steueranordnung nach Anspruch 3, **dadurch gekennzeichnet, dass** in der Safing-Auswerteeinheit (6) aus den Beschleunigungssignalen $(a_x, a_y)$ des X-Y-Beschleunigungssensors der Referenzwert (R) gebildet wird und dass ein bei einer signifikanten Abweichung des Beschleunigungssignals $(a_\delta)$ vom Referenzwert (R) erzeugtes Störfallsignal das Auslösen der Insassenschutzmittel verhindert.

5. Steueranordnung nach Anspruch 4, **dadurch gekennzeichnet, dass** das Störfallsignal ein an eine Schalteinheit (8) geliefertes Sperrsignal $(S_s)$ ist, das die Ausgabe eines Zündsignals (Z) für die Insassenschutzmittel auch dann verhindert, wenn von der Auswerteeinrichtung (4) ein Auslösesignal $(S_a)$ erzeugt wird.

6. Steueranordnung nach einem der vorstehenden Ansprüche, **dadurch gekennzeichnet, dass** durch das Sperrsignal $(S_s)$ gleichzeitig eine Warneinrichtung (61) des Insassenschutzsystems ausgelöst wird.

**Claims**

1. Control system for occupant protection devices in a vehicle,

   - with a sensor unit, comprising at least one X-Y acceleration sensor (11) with two axes of sensitivity (x, y) perpendicular to each other, both of which lie in a plane parallel to a plane defined approximately by a longitudinal vehicle axis (A-A') and a transverse vehicle axis (B-B'), and

   - a further acceleration sensor (12) with an axis of sensitivity (D) in a plane parallel to the plane defined by the longitudinal vehicle axis (A-A') and the transverse vehicle axis (B-B'),

   - with its axis of sensitivity (D) forming an angle ($\delta$) with one of the axes of sensitivity (x, y) of the X-Y acceleration sensor (11) with a value between 15° and 75°,

   - with an analysis unit (4) to analyse acceleration signals $(a_x, a_y)$ supplied by the X-Y acceleration sensor (11) and to generate an activation signal $(S_a)$ to activate the occupant protection devices, and

   - with a switch unit (8) downstream from the analysis unit (4) to transmit an ignition signal (Z) on the basis of the activation signal $(S_a)$ and a further signal, with a reference value (R) being created from the acceleration signals $(a_x, a_y)$ from the X-Y acceleration sensor (11) in a sating analysis unit (6), and

   - with a block signal $(S_s)$ being generated in the event of a significant difference between an acceleration signal $(a_\delta)$ supplied by the further acceleration sensor (12) and the reference value (R) and being supplied to the switch unit (8), preventing transmission of the ignition signal (Z) to activate the occupant protection devices even if an activation signal $(S_a)$ is generated by the analysis unit (4) and

   - with a threshold value (SW) being created in the safing analysis unit (6) from at least one of the acceleration signals $(a_x, a_y, a_\delta)$ received and transmission of the block signal $(S_s)$ to the switch unit (8) being prevented until the threshold value (SW) is exceeded by at least one of the acceleration signals $(a_x, a_y, a_\delta)$.

2. Control system according to Claim 1, **characterised in that** a direction ($\alpha$) and a force (F) of an acceleration acting on the vehicle are determined in the analysis unit (4) from the acceleration signals $(a_x, a_y)$ supplied by the X-Y acceleration sensor (11) and that an acceleration signal $(a_\delta)$ supplied by the acceleration sensor (12) is used to generate a fault signal, if a significant difference is detected for the direction ($\alpha$) and the force (F) from the acceleration signals $(a_x, a_y, a_\delta)$.

3. Control system according to Claim 1 or 2, **characterised in that** the acceleration signal $(a_\delta)$ generated by the acceleration sensor (12) is compared in a safing analysis unit (6) with the acceleration signals ($a_x$, $a_y$).

4. Control system according to Claim 3, **characterised in that** the reference value (R) is created in the safing analysis unit (6) from the acceleration signals ($a_x$, $a_y$) of the X-Y acceleration sensor and that a fault signal generated in the event of a significant difference between the acceleration signal ($a_\delta$) and the reference value (R) prevents activation of the occupant protection devices.

5. Control system according to Claim 4, **characterised in that** the fault signal is a block signal ($S_s$) supplied to a switch unit (8), which prevents transmission of an ignition signal (Z) for the occupant protection devices, even if an activation signal ($S_a$) is generated by the analysis unit (4).

6. Control system according to one of the preceding claims, **characterised in that** a warning device (61) in the occupant protection system is activated at the same time by the block signal ($S_s$).

**Revendications**

1. Dispositif de commande pour moyens de protection des passagers dans un véhicule automobile

   - comprenant un dispositif de capteurs constitué d'au moins un capteur d'accélération X-Y (11) présentant deux axes de sensibilité (x, y) perpendiculaires l'un à l'autre, qui sont tout deux disposés dans un plan parallèle à un plan déterminé par un axe longitudinal de véhicule (A-A') et un axe transversal de véhicule (B, B'), et
   - d'un capteur d'accélération supplémentaire (12) présentant un axe de sensibilité (D) situé dans un plan parallèle au plan déterminé par l'axe longitudinal de véhicule (A, A') et l'axe transversal de véhicule (B, B').
   - l'axe de sensibilité (D) de celui-ci faisant un angle ($\delta$), qui a une valeur comprise entre 15° et 75°, avec l'un des axes de sensibilité (x, y) du capteur d'accélération X-Y (11),
   - comprenant un dispositif d'analyse (4) servant à analyser des signaux d'accélération ($a_x$, $a_y$) fournis par le capteur d'accélération X-Y (11) et à produire un signal de déclenchement ($S_a$) permettant de déclencher les moyens de protection des passagers,
   - comprenant une unité de commutation (8) connectée en aval du dispositif d'analyse (4) et servant à délivrer un signal d'amorçage (Z) en fonction du signal de déclenchement ($S_a$) et d'un autre signal, une valeur de référence (R) étant formée à partir des signaux d'accélération ($a_x$, $a_y$) du capteur d'accélération X-Y (11) dans une unité d'analyse de sécurisation (6).

   - tandis qu'un signal de blocage ($S_s$) est produit dans le cas d'un écart significatif d'un signal d'accélération ($a_\delta$), fourni par le capteur d'accélération supplémentaire (12), vis-à-vis de la valeur de référence (R) et est envoyé à l'unité de commutation (8), lequel empêche également la délivrance du signal d'amorçage (Z), servant à déclencher les moyens de protection des occupants, même lorsqu'un signal de déclenchement ($S_a$) est produit par le dispositif d'analyse (4), et
   - qu'une valeur de seuil (SW) est formée dans l'unité d'analyse de sécurisation (6) à partir d'au moins l'un des signaux d'accélération ($a_x$, $a_y$, $a_\delta$) reçus et que ce n'est que lors du dépassement de la valeur de seuil (SW) par au moins l'un des signaux d'accélération ($a_x$, $a_y$, $a_\delta$) que l'envoi du signal de blocage ($S_\delta$) à l'unité de commutation (8) est empêché.

2. Agencement de commande suivant la revendication 1, **caractérisé en ce que**, dans le dispositif d'analyse (4), une direction ($\alpha$) et une intensité (F) d'une accélération s'exerçant sur le véhicule automobile sont déterminées à partir des signaux d'accélération ($a_x$, $a_y$) délivrés par le capteur d'accélération X-Y (11) et **en ce qu'**un signal d'accélération ($a_\delta$) fourni par le capteur d'accélération (12) est utilisé pour produire un signal de perturbation lorsqu'une différence significative pour la direction ($\alpha$) et l'intensité (F) est constatée à partir des signaux d'accélération ($a_x$, $a_y$, $a_\delta$).

3. Agencement de commande suivant la revendication 1 ou 2, **caractérisé en ce que** le signal d'accélération ($a_\delta$) produit par le capteur d'accélération (12) est comparé aux signaux d'accélération ($a_x$, $a_y$) dans une unité d'analyse de sécurisation (6).

4. Agencement de commande suivant la revendication 3, **caractérisé en ce que**, dans l'unité d'analyse de sécurisation (6), la valeur de référence (R) est formée à partir des signaux d'accélération ($a_x$, $a_y$) du capteur d'accélération X-Y et **en ce qu'**un signal de perturbation produit dans le cas d'un écart significatif du signal d'accélération ($a_\delta$) vis-à-vis de la valeur de référence (R) empêche le déclenchement des moyens de protection des occupants.

5. Agencement de commande suivant la revendication 4, **caractérisé en ce que** le signal de perturbation est un signal de blocage ($S_s$), envoyé à une unité de commutation (8), qui empêche la délivrance d'un signal d'amorçage (Z) pour les moyens de protection des occupants même lorsqu'un signal de

déclenchement $(S_a)$ est produit par le dispositif d'analyse (4).

6. Agencement de commande suivant l'une des revendications précédentes, **caractérisé en ce qu'**un dispositif d'avertissement (61) du système de protection des occupants est déclenché en même temps par le signal de blocage $(S_s)$.

FIG 1

# FIG 2

# FIG 3